# EUROPEAN PATENT SPECIFICATION

(11) **EP 0 544 188 B1**
(45) Date of publication and mention of the grant of the patent: **18.02.1998**
(21) Application number: 92119731.5
(22) Date of filing: 19.11.1992
(51) Int. Cl.: H04L 12/46, H04L 12/66, H04L 12/56

(54) **Message data cell multiplexing apparatus and method for use in a communication system**
Multiplexvorrichtung für Nachrichtendatenzellen und Methode zur Verwendung in einem Kommunikationssystem
Dispositif de multiplexage des cellules de messages de données et méthode pour usage dans un système de communication

(30) Priority: 25.11.1991 JP 308998/91
(43) Date of publication of application: 02.06.1993
(73) Proprietor: MITSUBISHI DENKI KABUSHIKI KAISHA, Chiyoda-ku Tokyo (JP)
(72) Inventor: Shikama, Toshihiro, c/o Mitsubishi Denki K.K., Kamakura-shi, Kanagawa (JP)
(74) Representative: Pfenning, Meinig & Partner

(56) References cited:
- DE-A- 3 904 403
- IEEE INFOCOM'91 vol. 3, April 1991, BAL HARBOUR,FL US pages 1160 - 1167 L. MONGIOVI ETAL. 'A PROPOSAL FOR INTERCONNECTING FDDI NETWORKS THROUGH B-ISDN'
- IEEE JOURNAL ON SELECTED AREAS IN COMMUNICATION vol. 9, no. 7, September 1991, NEW YORK US pages 1110 - 1118 H. J. CHAO 'A NOVEL ARCHITECTURE FOR QUEUE MANAGEMENT IN THE ATM NETWORK'

## Description

### BACKGROUND OF THE INVENTION

### i) Field of the Invention:

The present invention generally relates to networking systems and, more particularly, to a message data cell multiplexing apparatus for interconnecting local area network (LAN) systems with asynchronous transfer mode (ATM) networks such as a broadband integrated services digital network (ISDN).

### ii) Description of the Prior Art:

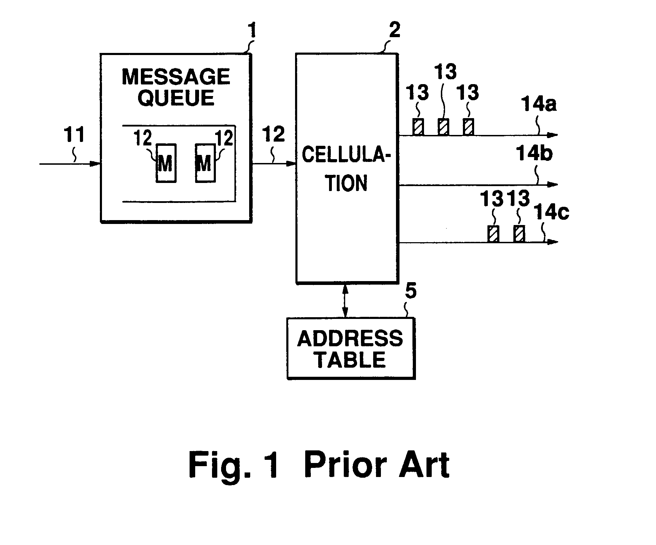

Fig. 1 shows a conventional cell multiplexing apparatus as disclosed in "An Architecture For LAN Interconnection In B-ISDN", T. Shikama et al., Canadian Conference on Electrical and Computer Engineering, Session 55.2.1, 1990. The conventional cell multiplexing apparatus includes a message transmission queue 1 for storing transmission messages that have been output from a LAN. The messages are typically transmitted in variable length frames. The messages are transmitted by an input line 11 through the queue 1 in a first-in first-out (FIFO) fashion. The queue 1 is coupled to a cellulation unit 2, which has two main functions. First, the cellulation unit determines the logical channel number of the destination channel from destination information held in a header part of a waiting transmission message 12. The messages are taken out of the message transmission queue 1 in the same order as the messages arrived at the queue. The logical channel number is determined by reference to an address conversion table 5. The address conversion table 5 is a correspondence table that is used in carrying out conversion between the destination information, which designates the destination terminal for receiving the transmission message via the transmission line, and the number information of the logical channel 14a, 14b or 14c of the user network interface. Second, the cellulation unit 2 delimits the transmission message 12 into fixed length units and assigns destination channel number information to the header parts of the units to generate cells 13. Each cell is fifty-three bytes in length. The transmission message may, however, vary in length. The cellulation unit 2 then transmits in order all cells 13 constituting the transmission message 12 to the proper logical channel or channels 14a, 14b, and 14c of a user network interface. The cellulation unit 2 repeats the above-described operation for each message 12 that is held in the queues.

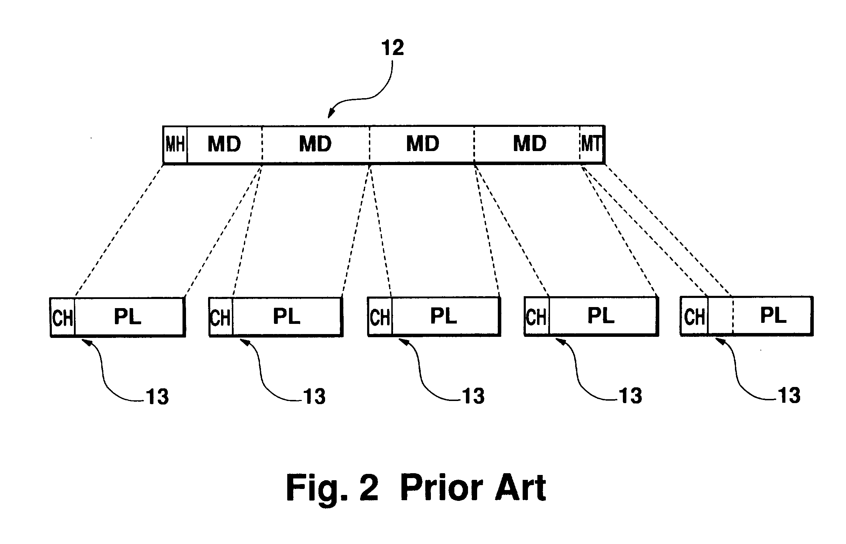

Fig. 2 shows an example of a transmission message 12. The transmission message 12 includes a message header field MH, message data fields MD, and a message tail field MT. This message 12 may vary in length, but, usually, a message is one frame in length. Each cell 13 formed from the message 12 includes a cell header field CH (5 bytes in length) and a cell data field PL, known as a pay load (48 bytes in length).

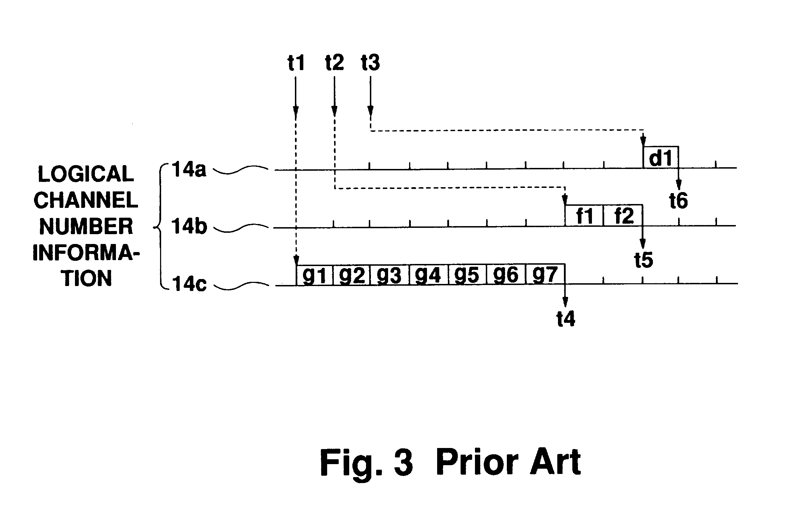

The aforementioned conventional cell multiplexing apparatus adopts a message unit successive transmission mode to transmit the cells of a message unit (message unit successive transmission mode) to their destination. For example, as shown in Fig. 3, after all seven of the cells (g₁ to g₇) of a first message generated at time t₁ are transmitted down logical channel 14c, the cellulation unit 2 (Fig. 2) transmits two cells (f₁ and f₂) of a second message, generated at time t₂, to the logical channel 14b, and, then, a lone cell (d₁) of a third message, generated at time t₃, is sent down the logical channel 14a. In the message unit successive transmission mode, if the transmission time of one cell is regarded as one unit, the messages generated at times t1, t2 and t3 are delayed for seven, eight, and eight units, respectively. Hence, the average delay of these three messages 12 is [(7+8+8)/3] or 7.7 units.

The data transmission speed of a typical ATM user network interface is 150 Mbps, as specified by the CCITT standard. In contrast, the data transmission speed of a typical LAN is quite small relative to the data transmission speed of the ATM user network interface. Accordingly, it is generally assumed that no substantial waiting problem arises, and, thus, the problem of waiting is in large part disregarded. However, in the case wherein a long message is transmitted, when a plurality of cells produced from the transmission message are continuously transmitted to the ATM communication network at the maximum speed (e.g., 150 Mbps), the cell multiplexing apparatus is occupied for a long period of time. As a result, the cell multiplexing apparatus cannot transmit the cells sent from other terminals and these messages from other terminals must wait.

When another terminal performs data transmission that requires real time transmission of image, sound, or other data, since the influence of the other transmission is large, it is necessary to restrain the maximum speed of transmission of the image, sound, or other data. How much the maximum speed is restrained varies but, in most instances, the effective data transmission speed of the user network interface is insufficient relative to the data transmission speed of the LAN. Under such circumstances, a substantial number of messages must wait.

IEEE INFOCOM '91, vol. 3, April 1991, BAL HARBOUR, FL US, pages 1160-1167, L. MONGIOVI ET AL. "A PROPOSAL FOR INTERCONNECTING FDDI NETWORKS THROUGH B-ISDN" already discloses a message data cell multiplexing apparatus for dividing a message having destination information into cells that have a preditermined length, and multiplexing the cells to corresponding logical channels, which apparatus comprises a message queue unit for temporarily storing input transmission messages and for outputting input messages in a first-in/first-out fashion, a cellulation unit for dividing the input messages into cells that are output, for determining corresponding logical channels to be used for transmission of the cells from the destination information of each message that is output from the message queue unit and for adding information relating to the corresponding logical channels to prepare the cells, a cell queue unit for temporarily storing the cells output from the cellulation unit and for outputting the stored cells in a first-in/first-out fashion, and sending means for receiving the cells output from the cell queue unit and sending out the cells to the corresponding logical channels. However, there is no indication relating to the order of sending out the cells to the different logical channels.

### SUMMARY OF THE INVENTIONS

It is, therefore, the object of the present inventions to improve the prior art apparatuses in such a manner that the average delay of overlapping messages is reduced.

In order to solve this object, according to the first invention a message cell multiplexing apparatus for dividing input messages into fixed length cells and for multiplexing the cells to logical channels in accordance with destination information provided in the input messages, said apparatus comprising: a) a message queue unit for storing input messages; b) a cellulation unit for dividing the messages into fixed length cells, for determining the logical channels over which the cells are to be transmitted and for adding information to the cells regarding the logical channels over which the cells are to be transmitted; c) a cell queue unit for concurrently storing the cells for multiple messages that are output from the cellulation unit and for outputting the cells, and d) a transmitter for transmitting each cell received from the cell queue unit to the logical channels during a time slot is characterized in that the cells of at least one of the input messages are transmitted in non-consecutive time slots.

Further, in order to solve this object, according to the second invention a message data cell multiplexing apparatus for dividing a message having destination information into cells that have a predetermined length and multiplexing the cells to corresponding logical channels, comprising: a) message queue unit for temporarily storing input transmission messages and for outputting input messages in a first-in/first-out fashion, b) cellulation unit for dividing the input messages into cells that are output, for determining corresponding logical channels to be used for transmission of the cells from the destination information of each message that is output from the message queue unit and for adding information relating to the corresponding logical channels to prepare the cells; c) cell queue unit for temporarily storing the cells output from the cellulation unit and for outputting the stored cells in a first-in/first-out fashion; and d) sending means for receiving the cells output from the cell queue unit and sending out the cells to the corresponding logical channels is characterized by a cell distribution unit for distributing region numbers of memory regions in the cell queue unit, said region numbers being calculated from destination information of each message to the cells output from the cellulation unit.

This object is also solved by a method for use in a communication system having a cell queue with a plurality of queues for storing fixed length cells and a set of logical channels over which the cells are to be transmitted, wherein cells of each input message are stored in a respective queue, which is characterized in that cells from each of the queues are output in a sequence down the logical channels without outputting all of the cells of at least one message before a cell from one of the other messages is output.

### BRIEF DESCRIPTION OF THE DRAWINGS

The present invention will be more fully described in the following description of the preferred embodiments with reference to the accompanying drawings, in which:
Fig. 1 is a schematic block diagram showing a transmission operation in a conventional cell multiplexing apparatus;
Fig. 2 schematically shows cells of a message to be processed in a cellulation unit of the conventional apparatus shown in Fig. 1;
Fig. 3 is a timing chart of transmission of messages by the cellulation unit of the conventional apparatus of Fig. 1 in message unit successive transmission mode;
Fig. 4 is a schematic block diagram of an interconnection system of LANs of a cell multiplexing apparatus according to the present invention;
Fig. 5 is a schematic block diagram of a first preferred embodiment of a cell multiplexing apparatus of the present invention;
Fig. 6 is a more detailed schematic block diagram of the cellulation unit 2 and the address correspondence table of Fig. 5;
Fig. 7 is a timing chart of transmission of cells of messages to be processed in the queue selector 4 of Fig. 5;
Fig. 8 is a more detailed schematic block diagram of the queue selector 4 and cell queue 3 of Fig. 5;
Fig. 9 is a more detailed block diagram of selecting circuit 40a of Fig. 8;
Fig. 10 is a schematic block diagram of a second preferred embodiment of a cell multiplexing apparatus of the present invention;
Fig. 11 is a schematic block diagram of a third embodiment of a cell multiplexing apparatus according to the present invention; and
Fig. 12 is a diagram of the distribution table 7 of Fig. 11;
Fig. 13 is a flowchart of the steps performed by the cell distribution unit 6a of Fig. 11;
Fig. 14 is a timing chart of a sequence in which one cell is selected at a time;
Fig. 15 is a timing chart of a sequence in which two cells are selected at a time;
Fig. 16 is a more detailed block diagram of a queue selector and cell queue of a fourth preferred embodiment;
Fig. 17 is a flowchart of the steps performed by the queue scanning and processing unit 48 of Fig. 16.

### DETAILED DESCRIPTION OF THE PREFERRED EMBODIMENTS

The present invention will now be described relative to its preferred embodiments with reference to the attached drawings, wherein like reference characters designate like or corresponding parts throughout different views, and, thus, the repeated description thereof is omitted for brevity.

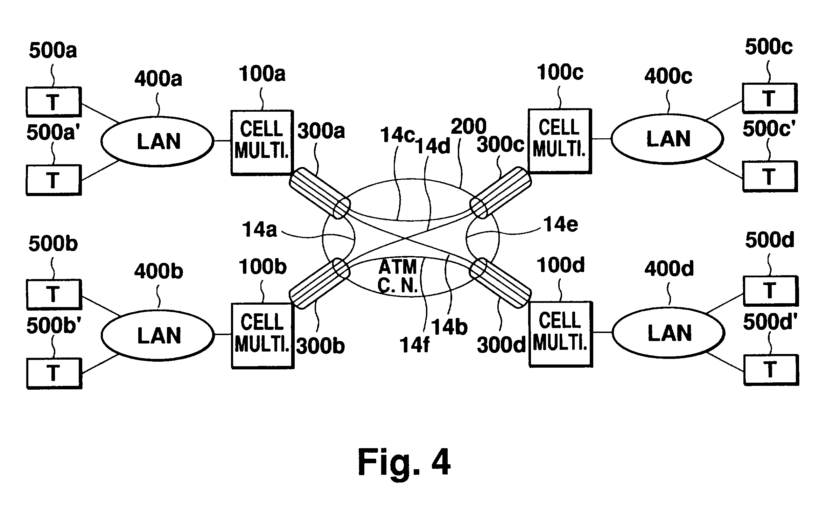

Fig. 4 shows an interconnection system for interconnecting a plurality of LANs 400a, 400b, 400c and 400d. As shown in Fig. 4, a plurality of cell multiplexing apparatuses 100a, 100b, 100c and 100d are coupled to logical channels 14a-14f via respective user network interfaces 300a, 300b, 300c and 300d of an ATM communication network 200. Each cell multiplexing apparatus 100a, 100b, 100c and 100d is also connected to a plurality of terminals (T) 500a, 500a', 500b, 500b', 500c, 500c', 500d and 500d' via a corresponding LAN. Each cell multiplexing apparatus 100a, 100b, 100c and 100d delimits or divides an input transmission message 12 of indeterminate length into fixed length cells 13. The cells 13 are created in the same manner as the conventional approach described above relative to Fig. 2.

When a first terminal 500a, that is connected to a first cell multiplexing apparatus 100a via a first LAN 400a, transmits a transmission message to a second terminal 500c, which is connected to a second cell multiplexing apparatus 100c via a second LAN 400c, the message is sent from the first terminal 500a to the first cell multiplexing apparatus 100a via the first LAN 400a. The first cell multiplexing apparatus 100a not only recognizes the transmission destination (which is the second terminal 500c) but also recognizes the second cell multiplexing apparatus 100c connected to the second terminal 500c via the second LAN 400c. The first cell multiplexing apparatus 100a recognizes which of the logical channels 14a - 14f leads to the second cell multiplexing apparatus 100c from destination information included in a header of the input message 12 and transmits the obtained cells of the message to the second cell multiplexing apparatus 100c through the corresponding logical channels 14c of the ATM communication network 200. Then, the second cell multiplexing apparatus 100c receives the series of cells of the message, reproduces the original transmission message from the cells, and transmits the reproduced message 12 to the second terminal 500c via the second LAN 400c.

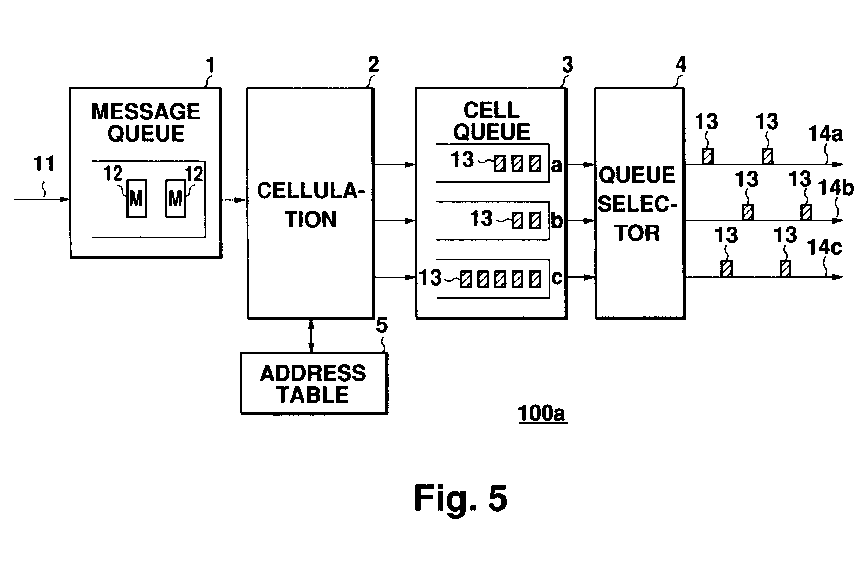

Fig. 5 shows the first preferred embodiment of the cell multiplexing apparatus 100a according to the present invention. The other cell multiplexing apparatus 100b, 100c and 100d are of identical construction. In this embodiment, the cell multiplexing apparatus 100a comprises a message transmission queue unit 1 for temporarily storing the transmission messages, that were (M) 12 input via an input line 11, in a FIFO fashion. The cell multiplexing apparatus 100a also includes a cellulation unit 2 for dividing the message 12, which is of an indeterminate length, into fixed length cells 13. In addition, the cell multiplexing apparatus includes a cell transmission queue unit 3 for temporarily storing cells 13, a queue selector 4 for selecting cells that are read out from the cell transmission queue unit 3 in a predetermined order, and an address conversion table 5, having a corresponding table for converting the destination information specified in the message 12 to a corresponding identification number of a logical channel.

The operation of the cell multiplexing apparatus shown in Fig. 5 will now be described.

The message 12 transmitted from the terminal 500 (Fig. 4) is input from the input line 11 (Fig. 5) to the message transmission queue unit 1 of the cell multiplexing apparatus 100a via the corresponding LAN 400a (Fig. 4). The message transmission queue unit 1 (Fig. 5) temporarily stores the input message 12 and outputs each message 12 in the order in which it was input. The cellulation unit 2 not only divides the message 12 sent from the message transmission queue unit 1 into cells 13 of a fixed length but also adds a header that specifies destination information for each cell 13. The destination information includes the identification number of the transmission logical channel 14a, 14b and 14c for the cell. The identification number is obtained from the address conversion table 5.

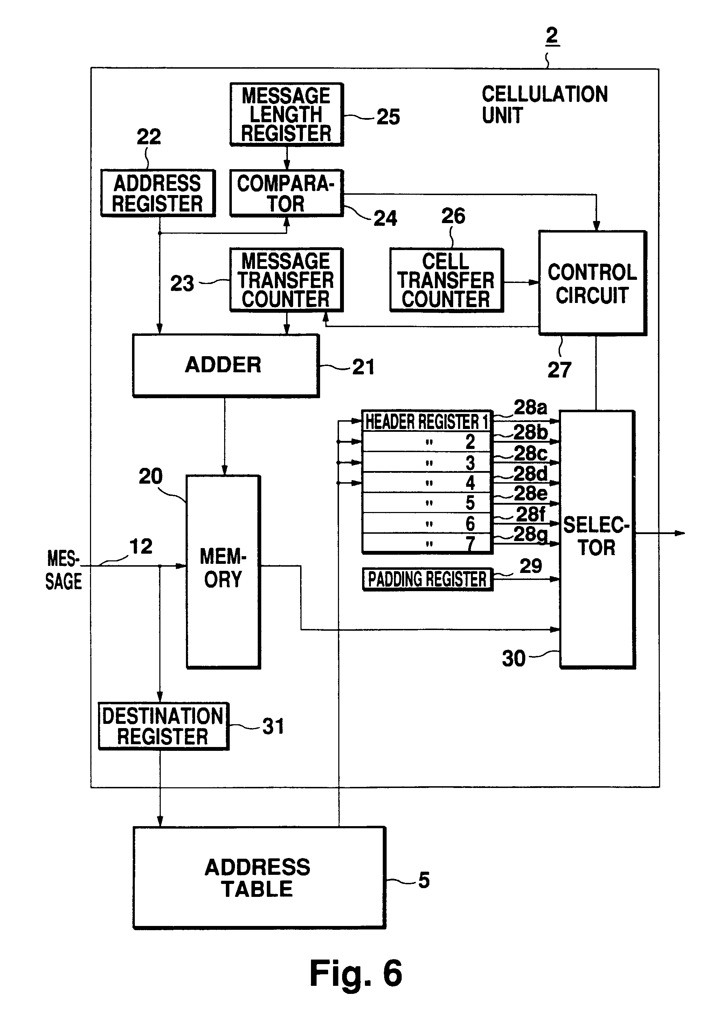

Fig. 6 shows a more detailed schematic block diagram of the cellulation unit 2. An input message 12 is stored serially on a byte-by-byte basis in a memory 20. The memory may be a RAM or other suitable type of memory. The length in bytes of the incoming message is stored in the message length register 25. In addition, destination data contained in the message 12 is stored in the destination data register 31. The first address in which the message is stored in memory 20 is initially held in address register 22.

During operation of the cellulation unit 2, the destination data held in destination data register 31 is used to retrieve a logical channel number from address correspondence table 5. In particular, the destination data is used as an index to locate a logical channel identification number held in the address table 5. The logical channel identification number is then forwarded to the first four header registers 28a, 28b, 28c and 28d so that it may be inserted into the header of cells that are produced by the cellulation unit.

A cell transfer counter 26 is provided to monitor the number of cells that have been generated by the cellulation unit for each message. Initially, the cell transfer counter is set at a value of zero. When a cell is transferred out of the cellulation unit 2, the transfer counter 26 is incremented. The output of the cell transfer counter 26 is fed to a control circuit 27 that controls operation of a selector 30. The selector is connected to the memory 20, the header registers 28a-28g and a padding register 29.

When the cell transfer counter 26 has a value in the range of 0-6, the contents of the head register 28a-28g are serially selected in sequence and the contents are output from the selector 30. The selection of the header registers 28a-28g ensures that the header of the cells are output. In contrast, when the cell transfer counter 26 has a value in the range of 8-52, the selector 30 selects the memory 20. The data held in the memory 20 is then read in sequence. Hence, the data portions of the cells are output. A message transfer counter 23 is incremented in a timed relationship with the value of the cell transfer counter 26. The contents of the address register 22 (which was initialized as the first address in the memory 20) and the value of the message transfer counter are added by an adder 21 to obtain the reading address for the memory 20. At first, the message transfer counter 23 has an initial value of zero. These steps are repeated for each cell in the message until no more of the message remains.

While the memory 20 is reading data, a comparator 24 detects whether or not the value of the message transfer counter 23 equals the value held in the message length register 25. When these two compared values are equal, the entire message has been transferred. However, if the number of bytes transmitted is below the predetermined number of bytes of data for one cell, a padding register 29 is selected by the selector 30 so as to add additional bytes of data to complete the cell.

The cells 13 that are output by the cellulation unit 2 are input to the cell transmission queue unit 3 and are temporarily stored therein. The cell transmission queue unit 3 classifies and stores the input cells 13 based on the logical channels 14a-14c to which the cells are destined. That is, in the cell transmission queue unit 3, as shown in Fig. 5, the input cells 13 are classified into three classes a, b and c, corresponding to the transmission logical channels 14a-14c. The cells are then stored in the corresponding queue, a-c, in the order that they were input. The cells 13 are next output down the corresponding transmission logical channel 14a, 14b or 14c in the order that they were input. Hence, the cell transmission queue unit 3 outputs the input cells 13 destined for transmission logical channel 14a, 14b or 14c in a FIFO fashion. The cell transmission queue unit 3 need not store the cells in a physically separated manner, and, thus, the storing area is not limited as long as the cells can be output in a FIFO fashion. That is, after adding the classification to the data, the cells may be stored in the cell transmission queue unit 3, and the cells may be subsequently read out of the cell transmission queue unit.

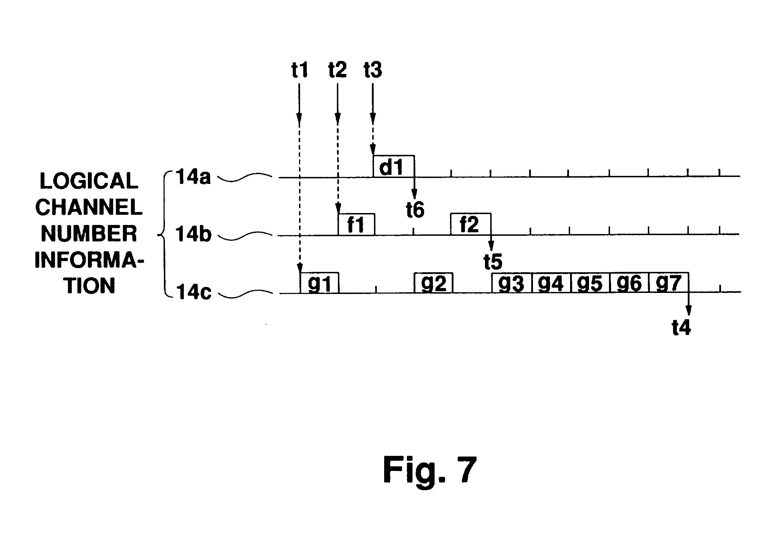

Fig. 7, illustrates an example of how the cells of different messages are output by the queue selector 4 (Fig. 5). Suppose that a message d is composed of one cell d₁ and further suppose that this message is to be transmitted to its destination via the logical channel 14a. Also suppose that a message f is composed of two cells f₁ and f₂ that are to be transmitted to its destination via logical channel 14b, and lastly suppose that a message g is composed of seven cells g₁ to g₇ that are to be transmitted to their destination via the logical channel 14c. These three messages d, f and g are input to the cell transmission queue unit 3 in the message order g, f and d, and the messages are stored in respective portions of the cell transmission queue unit 3. The queue selector 4 (Fig. 5) outputs cell g₁ to the logical channel 14c at time t₁ (see Fig. 7), outputs the cell f₁ to the logical channel 14b at time t₂, and outputs the cell d₁ to the logical channel 14a at time t₃. Subsequently, the queue selector 4 (Fig. 5) outputs cells in the message order g₂, f₂, and g₃ to g₇ (Fig. 7). The transmission of message d, message f and message g are finished at time t₆, time t₅ and time t₄, respectively.

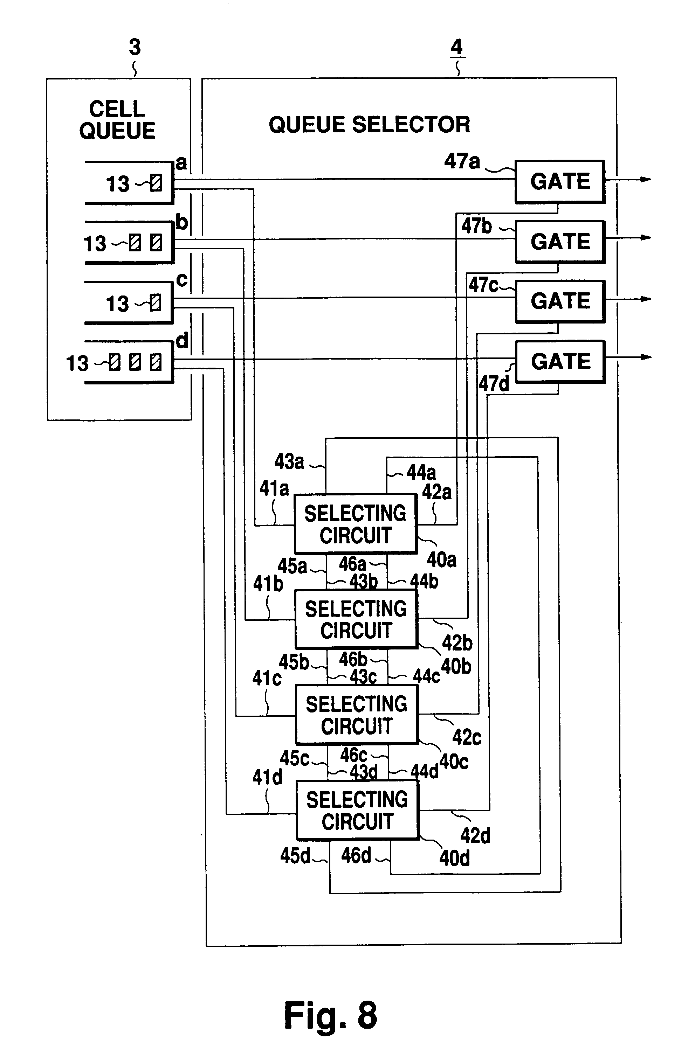

Fig. 8 provides a more detailed block diagram of the cell queue 3 and the queue selector 4. In the illustrative embodiment, there are four cell queues which have respective selecting circuits 40a-40d. Each of the selecting circuits 40a-40d has an input 41a-41d that is connected to the corresponding cell queue a-d. Likewise, each selecting circuit has an output 42a-42d that is coupled to a matching gate 47a-47d. The outputs 42a-42d determine whether the gate is open so as to allow a cell from the corresponding queue to the output by the queue selector 4. Each selecting circuit 40a-40d includes a selectable input 43a-43d which determines whether the selecting circuit is currently selected or not. In particular, when the selectable input 43a-43d is logically high, the corresponding selecting circuits 40a-40d is selected. Each selecting circuits 40a-40d also includes a selectable output that is connected to the selectable input of the preceding selecting circuit. Hence, the selectable output 45d of selecting circuit 40d is tied to the selectable input of selecting circuit 40a. The selecting circuits 40a-40d also include four selection inputs 44a-44d that allow the forceable selection of a particular selecting circuit. A forced selection output 46a-46d is also provided for each selecting circuit 40a-40d. The forced selection output 46a-46d of each selecting circuit 40a-40d is connected to the forced selection input 44a-44d of the next successive selecting circuit.

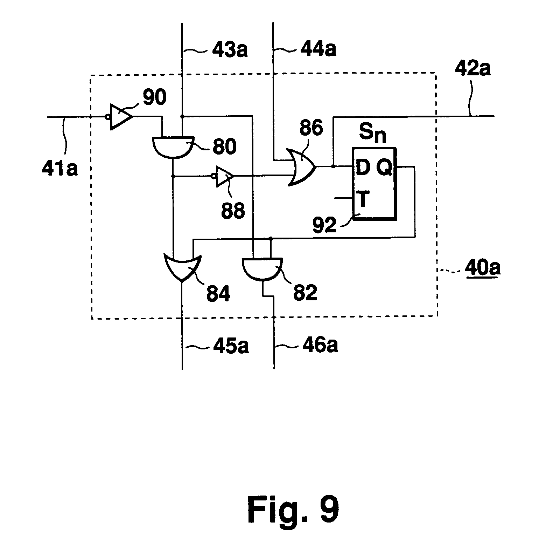

Fig. 9 provides a more detailed schematic diagram of the components of selecting circuit 40a. The remaining selecting circuits 40b-40d employ the same circuitry. In order to explain operation of these components, it is helpful to consider an example. Suppose that selecting circuit 40a has been selected. In such an instance, the selectable input 43a is logically high. If there is a cell in the corresponding first queue of the cell queue unit 3a, the input 41a is logically high. The input 41a is inverted by inverter 90 and fed into an AND gate 80 along with the selectable input 43a. The output from the AND gate 80 is passed to an OR gate 84. Assuming that the forced selection input 44a is low, the OR gate 86 receives a logically low input over the forced selection input 44a and a logical high input from inverter 88, which receives the output (logically low output) of AND gate 80. Thus, OR gate 86 produces a logically high output that serves as the output for the selecting circuit 42a. This logically high output is passed to the D input of the flip-flop 92. As the T input of the flip-flop 92 is tied to a logically low value, the flip-flop outputs the previously stored logic state input D. In this instance, we are supposing that the input was previously low. Hence, the output of the flip-flop 92 is logically low; thus causing the output of OR gate 84 to be logically low. The output from OR gate 84 serves as the selectable output 45a of the selecting circuit 40a. Since the selectable output is logically low, selecting circuit 40b is not selected.

If, on the other hand, the input 41a indicates the absence of any cells in the corresponding cell queue (i.e., input 41 is logically low), inverter 90 produces a logically high output that is fed into the AND gate 80. Since both of the inputs to the AND gate 80 are high, it produces a logically high output. The logically high output is passed to OR gate 84, which produces a logically high output over the selectable output 45a. Moreover, inverter 88 produces a logically low output that is fed to OR gate 86. Since both of the inputs to OR gate 86 are logically low, the output for the selecting circuit 42a is logically low. However, since the selectable output 45a is logically high, selecting circuit 40b is selected.

In both of these described instances, the output from flip-flop 92 is logically low. This output is passed to AND gate 82 along with the logically high selectable input 43a. Thus, in both of these instances, AND gate 82 produces a logically low output for the force selection output 46a. The force selection input 44a may be used to force the output of the selecting circuit 40a to be logically high. In particular, when force selection input 44a is logically high, the output of OR gate 86 is necessarily logically high, and, therefore, the output of the selecting circuit 42a is necessarily logically high.

In this embodiment, when the transmission time of one cell is regarded as one unit, the transmission time from the beginning to the end of the messages d, f and g are 1 unit, 4 units and 10 units, respectively. Also, since the transmission start times, t₁ to t₃, correspond to the generation times of the messages in the conventional example shown in Fig. 3, when the transmission start times are regarded as the generation times, the average delay time of the three messages d, f and g is [(1+4+10)/3] or 5 units. Thus, the delay time is reduced compared with the conventional example.

As described above, in the cell multiplexing apparatus 100a (Fig. 5) of the first embodiment, a plurality of messages 12 output from a plurality of terminals are classified into a plurality of logical channels 14a to 14f (Fig. 4) through which the messages are transmitted to the destination terminals. When there are a plurality of logical channels to be used for transmission, the cells 13 are output to the plurality of logical channels in a predetermined sequence. Hence, even when a long message is input, the long message may be transmitted to the logical channel along with another message that is to be output to another logical channel. Accordingly, the probability of the transmission of the cells to one logical channel is reduced, and, even when the transmission is carried out at the maximum bit rate, there is little detrimental effect on the other message transmissions.

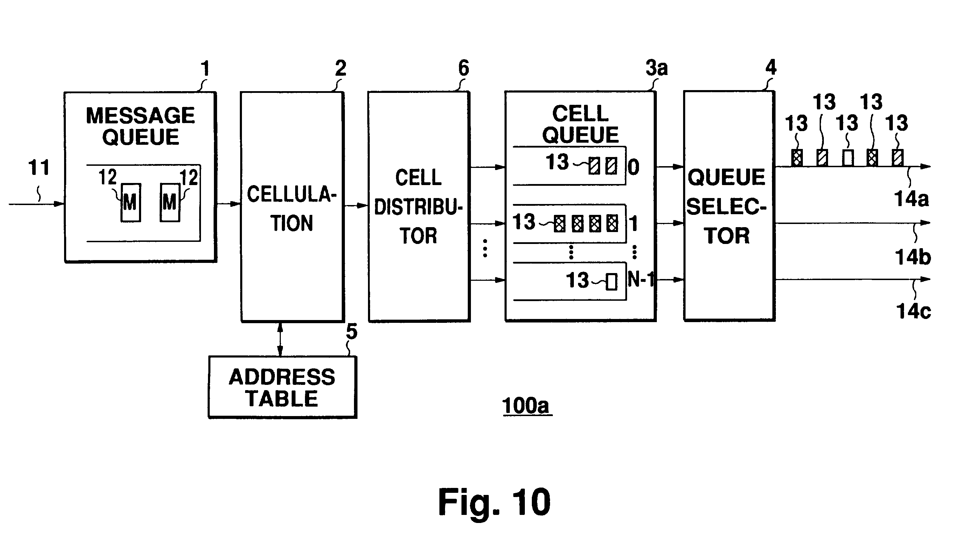

Fig. 10 illustrates a second preferred embodiment of the cell multiplexing apparatus 100, in accordance with the present invention. This second preferred embodiment has the same construction as the first embodiment shown in Fig. 5, except that the cells 13 that are output from the cellulation unit 2 are input to the cell transmission queue unit 3a via a cell distributor 6.

In this second embodiment, the cell transmission queue unit 3a is divided into N memory regions, denoted as 0 to (N-1), and the FIFO transmission of cells is carried out separately in every memory region.

The cell distributor 6 produces N selective information items on the basis of the destination information of the messages that are input. The selective information determines the memory regions of the cell transmission queue unit 3a in which the cells of the messages are stored. For example, the destination information of a message 12 is digital information that may be viewed as a decimal integer. Thus, the destination information is regarded as an integer, and the destination information integer is multiplied by a predetermined integer number to obtain a sufficiently large integer. Then, the obtained large integer is divided by the line number N of the cell transmission queue part 3a. The resulting residual of this calculation may be used as the selective information. By determining the selective information as described above, many terminals may be distributed to a predetermined number (N) of memory regions. Accordingly, the cells with the same destination may be stored in the same memory region and are output in a FIFO manner. Thus, no reversal in the order of the messages results.

The queue selector 4 consecutively outputs the cells 13 stored in the memory regions of the cell transmission queue part 3a to the corresponding logical channels in the same manner as the first embodiment described above. As a result, through the same logical channel, the messages to be transmitted to the different terminals are transmitted in order, and in such a case, the delay times of the messages is reduced.

As described above, in this embodiment, even when the transmission messages are concentrated on a plurality of terminals coupled to the same LAN, the average delay time of the generated messages may be shortened. Further, even when the waiting transmission cells are concentrated as one of the transmission messages to be transmitted to the plurality of terminals contained in the plurality of different LANs 400, the same results as result from operation of the first embodiment may be obtained.

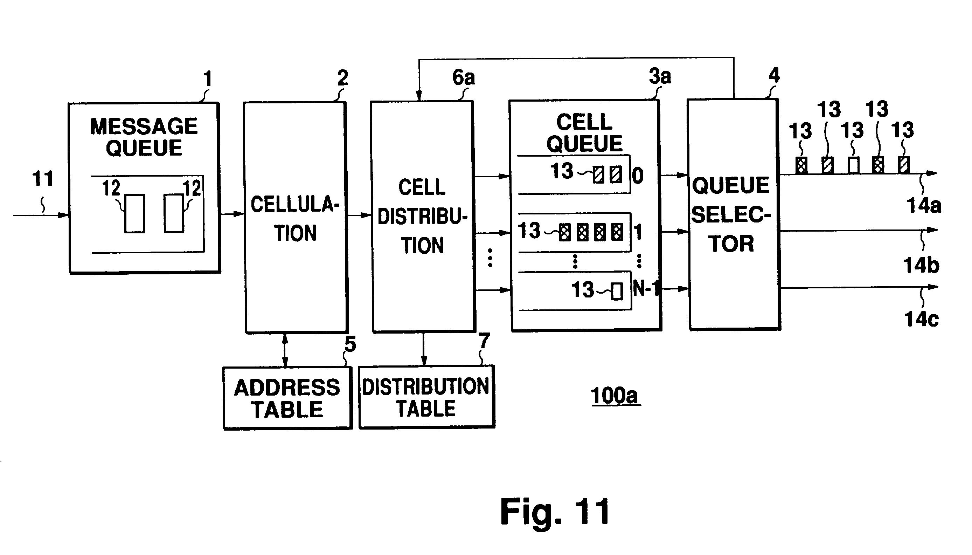

Fig. 11 shows a third preferred embodiment of the cell multiplexing apparatus 100a, in accordance with the present invention. This third preferred embodiment has the same construction as the second embodiment shown in Fig. 7, except that a distribution table 7 is connected to a cell distributor 6a, and the cell distributor 6a determines the selective information of the generated cells 13 by using the distribution table 7. In this third preferred embodiment, the selective information used by the cell distribution unit 6a is determined based on the destination of the message 12. Specifically, the selective information is chosen so as not to be the same selective information that is assigned to messages that are destined to different destinations, in contrast with the second embodiment in which the selective information is produced by a mathematical method.

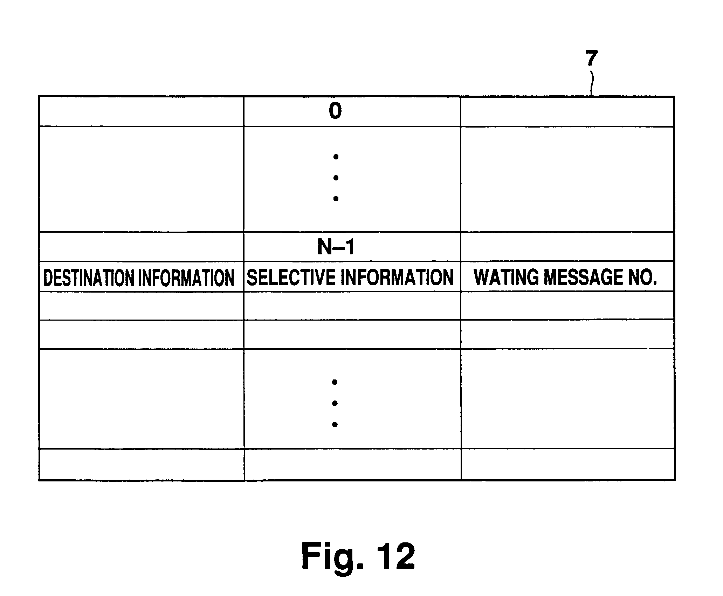

As shown in Fig. 12, the distribution table 7 includes three regions: a region for the destination information, a region for the selective information and a region for the waiting transmission message number. The distribution table 7 specifies the situation of the transmission waiting messages stored in the cell transmission queue unit 3a. Namely, the first region stores destination information of the messages present in the cell transmission queue unit 3a. The second region holds the selective information for exhibiting which regions (i.e., a region number from 0 to N-1) are distributed to the corresponding destination held in the first region. Lastly, the third region holds transmission waiting message numbers that indicates how many messages destined for the same destination are present. A certain extent of surplus in the region numbers is allowed to designate the overlapped selective information.

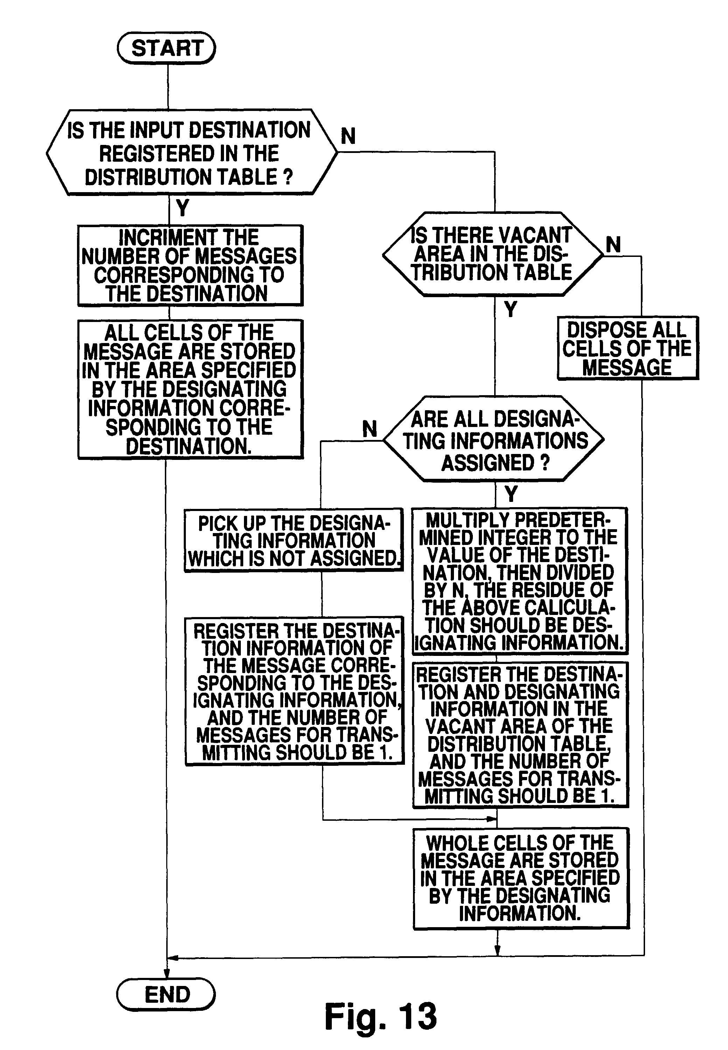

Fig. 13 shows a flowchart of the steps performed by the cell distributor 6a. The cell distributor 6a (Fig. 11) recognizes the destination information of the input message 12 from its header cell 13 and checks whether or not this recognized destination information is registered in the distribution table 7 (step 100 in Fig. 13), that is, whether messages for the same destination as the input message are present in the cell transmission queue unit 3 (Fig. 11). Then, when messages for the same destination as the input message are present, the message number corresponding to the relevant destination is incremented by one (step 102 in Fig. 13), and all cells of the messages are stored in the memory region specified by the selective information corresponding with the destination (step 104).

If the destination information value of the input message is not registered in the distribution table (see step 100), there is a vacant area in the distribution table (see step 106), and there are selective information values that are not assigned to corresponding destinations (see step 11), the relevant message is distributed to a determined selective information value having a transmission waiting message value of zero (see steps 118 and 120). Thus, the destination information of the input message is stored as the destination information corresponding to the selective information, and the number of messages is incremented to one. Hence, all cells of this message are output to the memory region specified by the distributed selective information in the cell transmission queue part 3a (Fig. 11).

Further, when the destination information is not registered (see step 100), entries 0 to N-1 (Fig. 12) of the selective information are distributed (see step 110 in Fig. 13), and there is a vacant region in the distribution table (see step 106), the selective information may be produced in the same manner as the second embodiment described above. In particular, the destination information integer is multiplied by a predetermined large integer, and the resulting product is divided by N (i.e., the number of memory regions in the cell queue unit) to obtain a selective information value (step 112). All cells constituting this message are output to the memory region specified by the selective information. Further, the destination information of the message is stored at the memory region identified by the corresponding selective information, and the waiting transmission message number that correspond to the selective information is set as one (step 114).

When there is no vacant region in the distribution table 7 (see step 106 in Fig. 13), the relevant cells are disposed (step 108) because if the corresponding selective information is not settled in the distribution table 7 (Fig. 12). A guarantee for storing the cells 13 (Fig. 8), constituting the same message 12 in the same memory region in the cell transmission queue part 3a, cannot be ensured. When these cells 13 are not stored in the same memory region, there is a danger of a reversal in the transmission order of the messages 12.

However, the vacant region of the distribution table 7 is determined to a proper number (certain degree of large number) depending on the destination terminal number, and the generation of the cells 13 that are not used can be made negligible.

In this embodiment, when the last cell 13 of one transmission waiting message 12 is taken out of the cell transmission queue part 3a, the queue selector 4 recognizes the finish of the transmission of the message 12 and informs the cell distributor 6a. Then, the cell distributor 6a subtracts one from the transmission waiting message number of the relevant message in the distribution table 7 according to the notice of the transmission finish of the message 12. When the transmission waiting number becomes zero, the memory region of the relevant destination information is regarded as the vacant region, and the following processing is carried out.

In this case, when there is a vacant memory region in the cell transmission queue part 3a, the new message 12 is distributed to this region. Accordingly, the N number of memory regions in the cell transmission queue part 3a may be effectively used to distribute the messages 12, and this prevents the messages for the different destinations being stored in the same memory region in the cell transmission queue part 3a.

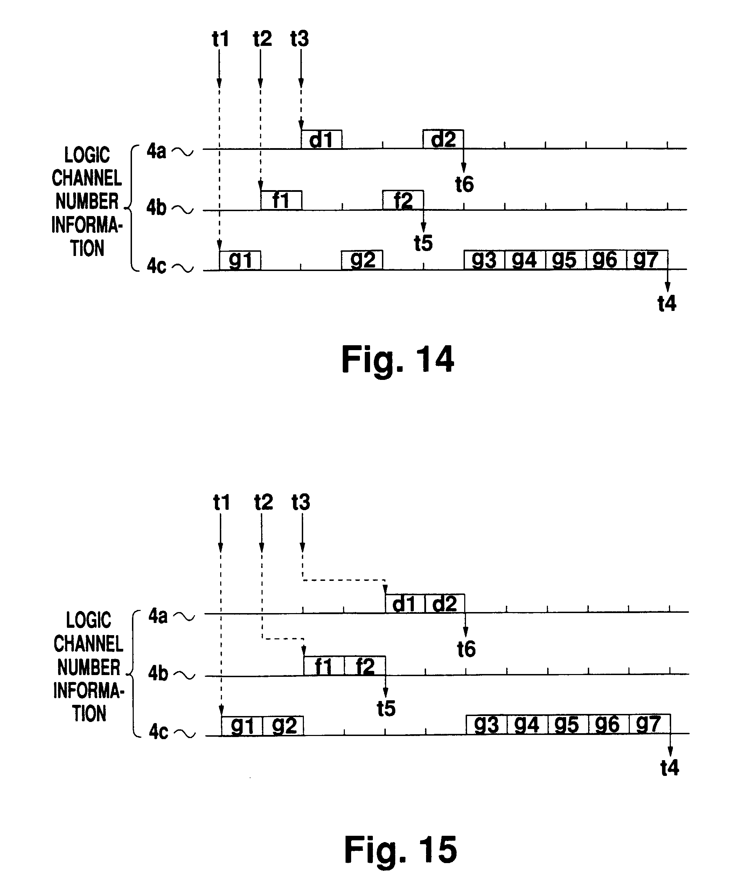

In the first preferred embodiment, described above, the cell multiplexing apparatus selects one cell at a time from each cell queue. There may be instances, however, where it is desirable to select more than one cell at a time from a particular queue. Fig. 14 illustrates a timing chart of a sequence in which the cell multiplexing apparatus selects one cell at a time. Fig. 15, in contrast, is a timing chart of a sequence in which the cell multiplexing apparatus selects two cells at a time in accordance with a fourth preferred embodiment. The timing chart of Fig. 14 is substantially equal to the timing chart of Fig. 7, but differs from the timing chart of Fig. 7 in that a message d, composed of two cells d₁ and d₂, is generated at time t₃.

In the example of Fig. 14, the average delay time of the three messages generated at times t₁, t₂ and t₃ is [(4+4+11)/3] or 6.3 units. In the example of Fig. 15, however, the average delay time of the three messages is [(4+3+11)/3] or 6 units. Thus, the average delay time is reduced when two cells are selected at a time rather than when one cell is selected at a time. In general, the number of cells to be selected at a time may be determined based upon the most common message length.

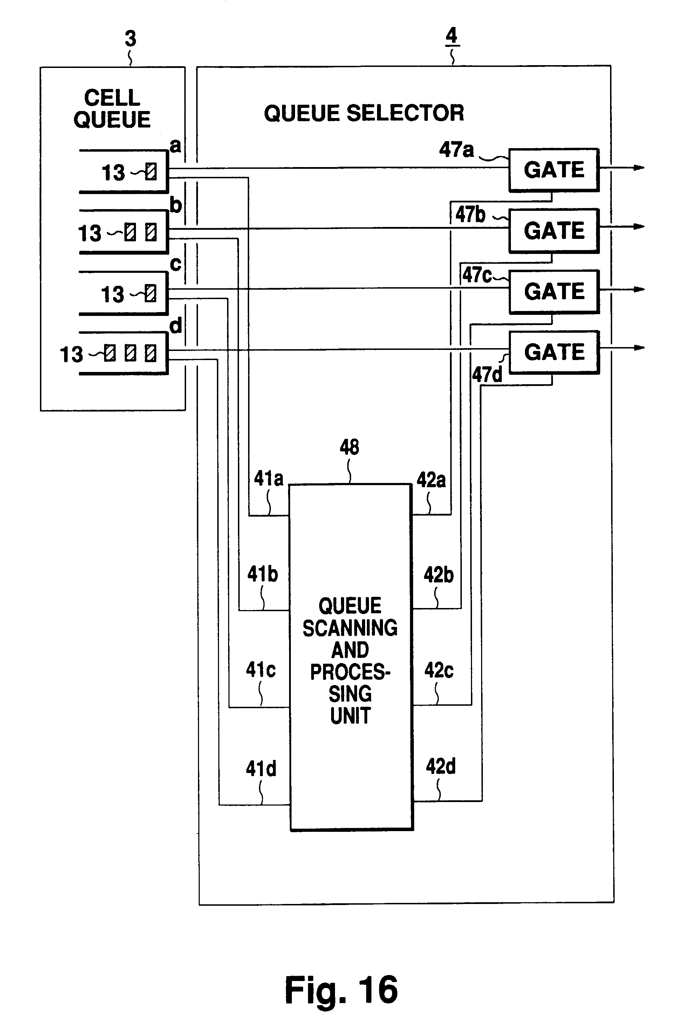

In the preferred embodiments described above, the queue selector 4 selects cells equally from each cell queue. In a fourth preferred embodiment, the selection performed by the queue selector 4 need not be equal for each cell queue. Fig. 16 is a block diagram showing a queue selector 4 of a fourth preferred embodiment and a cell queue 3a. The queue selector 4 includes a queue scanning and processing unit 48. The queue scanning and processing unit 48 receives inputs 41a-41d that are indicative of the presence or absence of cells in the corresponding queues. The queue scanning and processing unit 48 also includes a set of outputs 42a-42d that lead to gates 47a-47d. When a given queue is selected, the corresponding output 42a-42d is logically high so as to allow the corresponding gate 47a-47d to receive a cell from the queue.

The queue scanning and processing unit 48 operates generally as follows. For the purposes of the discussion below, a logically high value will be referred to as "ON" and a logically low value will be referred to as "OFF". The queue scanning and processing unit 48 may be configured so as to prioritize which queues are first serviced by the queue selector. For instance, suppose that a first queue group is composed of the queues associated with inputs 41a and 41b. Further suppose that a second queue group is composed of the queues associated with the inputs 41c and 41d. Still further, suppose that the cells from the first queue group are of a higher priority than the cells of the second queue group.

Initially, the queue scanning and processing unit 48 turns all of the outputs 42a-42d "OFF". Then, the queue scanning and processing unit 48 proceeds with the selection of a cell queue having a cell to be transmitted. Specifically, the cell queues a and b in the first cell queue are firstly selected and transmitted. The presence or absence of the cells in the cell queues is cyclically checked so that the cells will be equally selected within the first queue group. When there is no cell in the first queue group, a cell is selected from the second queue group c and d. The cells in the cell queues c and d of the second queue group are, likewise, cyclically selected. If no cell is found in the first cell queue group of the second cell queue group, no transmission of the cells is carried out.

The cells in the second queue group c and d are selected only when there is no vacant cell in the first queue group. In general, this preferential processing is advantageous when the cell queues are provided in correspondence with the destination logical channel and when the respective logical channels have different bandwidths. The logical channels having larger bandwidths are generally preferred.

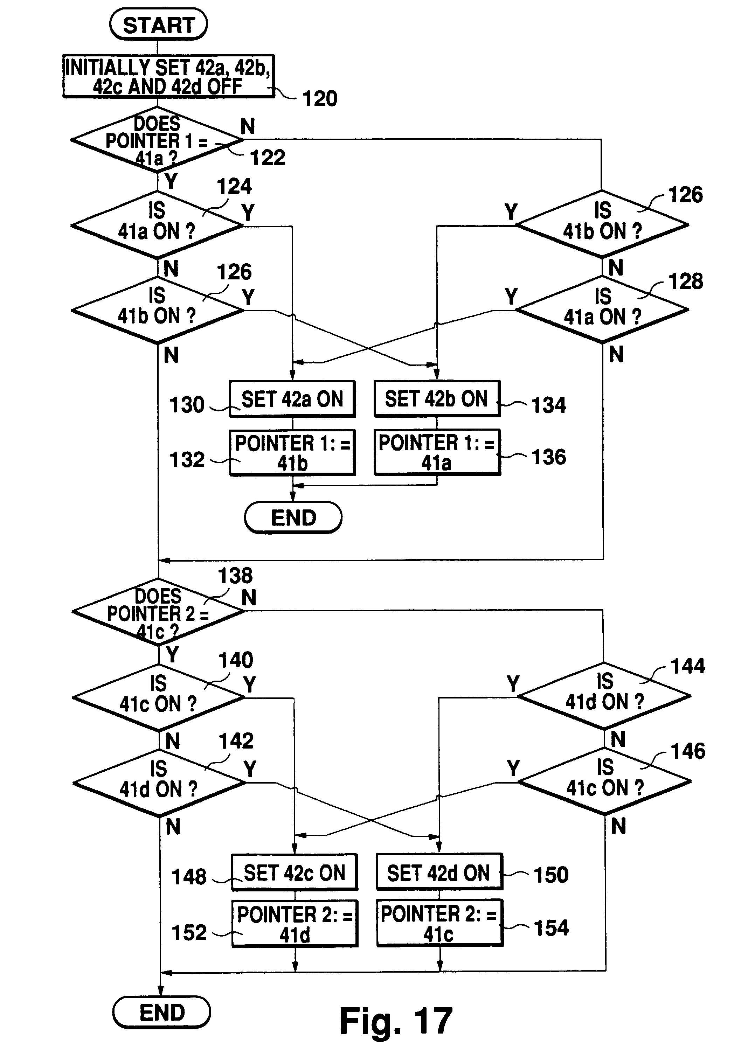

Fig. 17 provides a flowchart of how the queue scanning and processing unit operates. Specifically, the outputs 42a-42d are initially set off (step 120). The system employs two pointers, pointer 1 and pointer 2, to keep track of the cyclical checking within the respective queue groups. For the example grouping and preference scheme described above, the system then checks to see if pointer1 (i.e., the pointer in the first queue group) points to input 41a (step 122). This pointer identifies the next input in the first queue group to be checked. If pointer 1 points to the input 41a, the queue scanning and processing unit checks to see whether input 41a is "ON" (step 124). If input 41a is "ON", there is a cell to be transmitted from the queue associated with input 41a, and, thus, the corresponding output 42a is set "ON" (step 130). Since output 42a is "ON", the cell from the first cell queue is gated by gate 47a out of the queue selector 4. Next, the value of pointer 1 is updated to point to the input 41b (step 132).

If it is determined in step 124 that input 41a is not "ON", the next input (i.e., input 41b) in the first queue group is examined in step 126. If input 41b is "ON", the corresponding output 42b is set "ON" (step 134) so as to enable the cell from the corresponding queue to be output. In such an instance, pointer1 is updated to point to input 41a (step 136).

If in step 122 pointer1 does not point to 41a, the system checks to see if input 41b is "ON" (step 126). If input 41b is "ON", steps 134 and 136 are performed as described above. However, if input 41b is not "ON", the system checks the input 41a (step 128). When input 41a is "ON" in step 128, steps 130 and 132 are performed as described above.

If, at step 126, it is determined that input 41b is not "ON" or if, at step 128, it is determined that input 41a is not "ON", there are no cells to be output from the first cell queue group. Thus, the system examines the inputs of the other cell queue group c and d, beginning with step 138. At step 138, the queue scanning and processing unit determines whether pointer2 points to input 41c. If the pointer points to input 41c, the queue scanning and processing unit checks to see whether input 41c is "ON" (step 140). When input 41c is "ON", the corresponding output 42c is set on (step 148) and pointer2 is updated to point to the input 41d (step 152).

If at step 140 it is determined that input 41c is not "ON", the queue scanning and processing unit checks to see whether input 41d is "ON" (step 142). If input 41d is also not "ON", the system ends its routine and does not output any cells. However, if input 41d is "ON", the corresponding output 42d is set "ON" (step 150) and pointer2 is updated to point to input 41c (step 154).

If at step 138 it is determined that pointer2 does not point to input 41c, it is obvious that pointer2 points to input 41d, and the queue scanning and processing unit determines whether input 41d is "ON" (step 144). When input 41d is "ON", steps 150 and 154, as described above, are performed. On the other hand, if input 41d is not "ON", the system checks the input 41c to determine if it is "ON" (step 146). When input 41c at step 146, steps 148 and 152 are performed as described above. Lastly, when neither input 41d or input 41c are "ON", the system ends its routine and does not output any cells for this time frame.

Although the present invention has been described relative to preferred embodiments with reference to the accompanying drawings, it is intended to be readily understood that the present invention is not restricted to the preferred embodiments and that various changes and modifications may be made by those skilled in the art without departing from the scope of the present invention.

## Claims

1. A message cell multiplexing apparatus for dividing input messages (12) into fixed length cells (13) and for multiplexing the cells (13) to logical channels (14a-14c) in accordance with destination information provided in the input messages (12), said apparatus comprising:
a) a message queue unit (1) for storing input messages (12);
b) a cellulation unit (2) for dividing the messages (12) into fixed length cells (13), for determining the logical channels (14a-14c) over which the cells (13) are to be transmitted and for adding information to the cells (13) regarding the logical channels (14a-14c) over which the cells (13) are to be transmitted;
c) a cell queue unit (3) for concurrently storing the cells (13) for multiple messages that are output from the cellulation unit (2) and for outputting the cells (13); and
d) a transmitter (4) for transmitting each cell (13) received from the cell queue unit (3) to the logical channels (14-14c) during a time slot,
**characterized** in that
the cells (13) of at least one of the input messages (12) are transmitted in non-consecutive time slots.

2. An apparatus as recited in claim 1, wherein the transmitter (4) transmits at least one cell (13) from each input message (12) held in the cell queue unit (3) in accordance with a cyclical sequence of the input messages (12).

3. An apparatus as recited in claim 2, wherein according to the cyclical sequence, cells (13) from at least one of the input messages (12) in the cell queue unit (13) are transmitted more frequently than cells (13) from other input messages (12) in the cell queue unit (13).

4. An apparatus as recited in claim 2, wherein the cyclical sequence is fixed.

5. An apparatus as recited in claim 1, wherein the transmitter (4) transmits the cells (13) from the input messages (12) in accordance with a non-cyclical sequence of the input messages (12).

6. An apparatus as recited in claim 1, wherein the cell queue unit (3) comprises a plurality of queues and each queue holds a separate one of the input messages (12).

7. An apparatus as recited in claim 6, wherein the queues are prioritized into priority levels such that cells (13) from a higher priority level such hat cells (13) from a higher priority level queue are transmitted by the transmitter (4) before cells (13) from lower priority level queues are transmitted by the transmitter (4).

8. An apparatus as recited in claim 7, wherein multiple queues have a same priority level.

9. An apparatus as recited in claim 7, wherein each queue corresponds with one of the logical channels (14a-14c).

10. An apparatus as recited in claim 1, wherein input messages (12) are priorities into priority levels such that cells (13) from a higher level input messages (12) are transmitted by the transmitter before cells (13) from a lower priority level input message (12) are output by the transmitter (4).

11. An apparatus as recited in claim 10, wherein multiple input messages (12) have a same priority level.

12. An apparatus as recited in claim 1, wherein the transmitter (4) transmits multiple cells (13) of an input message (12) in consecutive time slots.

13. An apparatus as recited in claim 1, wherein for each successive pair of time slots, the transmitter (4) transmits a cell (13) from a first input message (12) during a first time slot in the pair and transmits a cell (13 from a second input message (12), which is different from the first input message (12), during a second time slot in the pair.

14. The apparatus as recited in claim 1, wherein comprising a conversion table (5) for storing, for each message (12), a corresponding relationship between the destination information of the input message (12) and identification information for the logical channels (14a-14c), wherein the cellulation unit (2) determines over which logical channel (14a-14c) the message (12) is to be transmitted from the destination information of the message (12) by reference to the conversion table.

15. A message data cell multiplexing apparatus for dividing a message (12) having destination information into cells (13) that have a predetermined length and multiplexing the cells (13) to corresponding logical channels, comprising:
a) message queue unit (1) for temporarily storing input transmission messages (12) and for outputting input messages (12) in a first-in/first-out fashion;
b) cellulation unit (2) for dividing the input messages (12) into cells (13) that are output, for determining corresponding logical channels (14a-14e) to be used for transmission of the cells (13) from the destination information of each message (12) that is output from the message queue unit (1) and for adding information relating to the corresponding logical channels (14a-14c) to prepare the cells (13);
c) cell queue unit (3a) for temporarily storing the cells (13) output from the cellulation unit (2) and for outputting the stored cells (13) in a first-in/first-out fashion; and
d) sending means (4) for receiving the cells (13) output from the cell queue unit (3a) and sending out the cells (13) to the corresponding logical channels (14a-14c),
**characterized** by
a cell distribution unit (6) for distributing region numbers of memory regions in the cell queue unit (3a), said region numbers being calculated from destination information of each message (12) to the cells (13) output from the cellulation unit (2).

16. An apparatus as recited in claim 15, wherein the cell queue unit (3a) outputs stored cells (13) of each region number in a first-in/first-out fashion.

17. The apparatus of claim 15, further comprising a distribution table (7) for recording the destination information of the messages present in the cell queue unit (3a), selective information for specifying region numbers that correspond with the destination information, and a number of waiting messages of each destination, wherein the cells queue unit (3a) distributes the region number by reference to the distribution table (7).

18. An apparatus as recited in claim 15, wherein the cell queue unit (3a) outputs stored cells (13) separately for each logical channel (14a-14c) in a first-in/first-out fashion.

19. The apparatus of claim 15, further comprising a conversion table (5) for storing, for each input message (12), a corresponding relationship between the destination information of the message (12) and identification information for the logical channels (14a-14c), wherein the cellulation unit (2) determines the corresponding logical channel (14a-14c) from the destination information of the message (12) by reference to the conversion table (5).

20. A method for use in a communication system having a cell queue with a plurality of queues for storing fixed length cells (13) and a set of logical channels (14a-14c) over which the cells (13) are to be transmitted, wherein cells of each input message (12) are stored in a respective queue,
**characterized** in that
cells (13) from each of the queues are output in a sequence down the logical channels (14a-14c) without outputting all of the cells (13) of at least one message (12) before a cell (13) from one of the other messages is output.

21. A method as recited in claim 20, wherein the step of outputting cells (13) further comprises outputting a fixed number of cells (13) from each queue in sequence.

22. A method as recited in claim 21, wherein the fixed number of cells (13) is a single cell.

23. A method as recited in claim 21, wherein the fixed number of cells (13) is a plurality of cells.

24. A method as recited in claim 20, wherein the sequence in which cells (13) are output from the queues is a cyclical sequence.

25. A method as recited in claim 20, wherein the outputting step further comprises the step of outputting cells (13) from multiple queues to a single one of the logical channels (14a-14b) in alternating fashion.

26. A method as recited in claim 20, further comprising the step of examining a distribution table (7) for each message (12) to determine on which logical channel (14a-14c) the cells (13) of the message (12) should be output.

## Patentansprüche

1. Multiplexvorrichtung für Nachrichtenzellen zur Aufteilung von eingegebenen Nachrichten (12) in Zellen (13) festgelegter Länge und zum Multiplexen der Zellen (13) auf logische Kanäle (14a-14c) in Übereinstimmung mit einer Bestimmungsinformation, die in der eingegebenen Nachricht (12) zur Verfügung gestellt wird, wobei die genannte Vorrichtung umfaßt:
a) eine Warteschlangeneinheit (1) für Nachrichten (12) zum Speichern eingegebener Nachrichten;
b) eine Zellbildungseinheit (2) zum Aufteilen der Nachrichten (12) in Zellen (13) mit festgelegter Länge zum Bestimmen der logischen Kanäle (14a-14c), über die die Zellen (13) übertragen werden sollen, und zum Hinzufügen von Information zu den Zellen (13) bezüglich der logischen Kanäle (14a-14c), über die die Zellen (13) übertragen werden sollen;
c) eine Warteschlangeneinheit (3) für Zellen zum gleichzeitigen Speichern der Zellen (13) für vielfache Nachrichten, die von der Zellbildungseinheit (2) ausgegeben werden und zum Ausgeben der Zellen (13); und
d) ein Überträger (4) zum Übertragen jeder Zelle (13), die von der Warteschlangeneinheit (3) für Zellen empfangen wird, an die logischen Kanäle (14a-14c) während eines Zeitschlitzes,
dadurch **gekennzeichnet**,
daß die Zellen (13) wenigstens einer der eingegebenen Nachrichten (12) in nicht aufeinanderfolgenden Zeitschlitzen übertragen werden.

2. Vorrichtung nach Anspruch 1,
wobei der Überträger (4) wenigstens eine Zelle (13) von jeder eingegebenen Nachricht (12), die in der Warteschlangeneinheit (3) für Zellen gehalten wird, in Übereinstimmung mit einer zyklischen Abfolge der eingegebenen Nachrichten überträgt.

3. Vorrichtung nach Anspruch 2,
wobei gemäß der zyklischen Abfolge die Zellen (13) von wenigstens einer der eingegebenen Nachrichten (12) in der Warteschlangeneinheit (13) für Zellen häufiger übertragen werden als Zellen (13) von anderen eingegebenen Nachrichten (12) in der Warteschlangeneinheit (13) für Zellen.

4. Vorrichtung nach Anspruch 2,
wobei die zyklische Abfolge festgelegt ist.

5. Vorrichtung nach Anspruch 1,
wobei der Überträger (4) die Zellen (13) von den eingegebenen Nachrichten (12) in Übereinstimmung mit einer nicht zyklischen Abfolge der eingegebenen Nachrichten (12) überträgt.

6. Vorrichtung nach Anspruch 1,
wobei die Warte-schlangeneinheit (3) für Zellen eine Vielzahl von Warteschlangen umfaßt und jede Warteschlange eine gesonderte der eingegebenen Nachrichten (12) enthält.

7. Vorrichtung nach Anspruch 6,
wobei die Warteschlangen in Prioritätsniveaus derart priorisiert sind, daß Zellen (13) einer Warteschlange mit höherem Prioritätsniveau durch den Überträger (4) übertragen werden, bevor Zellen (13) von einer Warteschlange mit niedrigerem Prioritätsniveau durch den Überträger (4) übertragen werden.

8. Vorrichtung nach Anspruch 7,
wobei mehrere Warteschlangen dasselbe Prioritätsniveau besitzen.

9. Vorrichtung nach Anspruch 7,
wobei jede Warteschlange einem der logischen Kanäle (14a-14c) entspricht.

10. Vorrichtung nach Anspruch 1,
wobei die eingegebenen Nachrichten (12) derart in Prioritätniveaus priorisiert werden, daß Zellen (13) von eingegebenen Nachrichten (12) mit höherem Niveau durch den Überträger übertragen werden, bevor Zellen (13) von eingegebenen Nachrichten (12) mit niedrigerem Prioritätsniveau durch den Überträger (4) ausgegeben werden.

11. Vorrichtung nach Anspruch 10,
wobei mehrere eingegebene Nachrichten (12) dasselbe Prioritätsniveau besitzen.

12. Vorrichtung nach Anspruch 1,
wobei der Überträger (4) mehrere Zellen (13) einer eingegebenen Nachricht (12) in aufeinanderfolgenden Zeitschlitzen überträgt.

13. Vorrichtung nach Anspruch 1,
wobei für jedes aufeinanderfolgende Paar von Zeitschlitzen der Überträger (4) eine Zelle (13) von einer ersten eingegebenen Nachricht (12) während eines ersten Zeitschlitzes des Paares überträgt und eine Zelle (13) von einer zweiten eingegebenen Nachricht (12), die von der ersten eingegebenen Nachricht (12) verschieden ist, während eines zweiten Zeitschlitzes des Paares überträgt.

14. Vorrichtung nach Anspruch 1, die umfaßt:
eine Umwandlungstabelle (5) zur Speicherung für jede Nachricht (12) einer entsprechenden Beziehung zwischen der Bestimmungsort-Information der eingegebenen Nachricht (12) und Identifikationsinformation für die logischen Kanäle (14a-14c), wobei die Zellbildungseinheit (2) bestimmt, über welchen logischen Kanal (14a-14c) die Nachricht (12) übertragen wird aus der Bestimmungsort-Information der Nachricht (12) durch Bezug auf die Umwandlungstabelle.

15. Multiplexvorrichtung für Nachrichtendatenzellen zur Aufteilung einer Nachricht (12), die eine Bestimmungsort-Information besitzt, in Zellen (13), die eine vorbestimmte Länge besitzen und zum Multiplexen der Zellen (13) auf entsprechende logische Kanäle, die umfaßt:
a) eine Warteschlangeneinheit (1) für Nachrichten zum vorübergehenden Speichern von eingegebenen Übertragungsnachrichten (12) und zur Ausgabe der eingegebenen Nachrichten (12) in einer first-in/first-out-Weise;
b) eine Zellbildungseinheit (2) zum Aufteilen der eingegebenen Nachrichten (12) in Zellen (13), die ausgegeben werden zur Bestimmung entsprechender logischer Kanäle (14a-14c), die zur Übertragung der Zellen (13) verwendet werden, aus der Bestimmungsort-Information jeder Nachricht (12), die von der Warteschlangeneinheit (1) für Nachrichten ausgegeben wird, und zum Hinzufügen von Information, die sich auf die entsprechenden logischen Kanäle (14a-14c) bezieht, um die Zellen (13) vorzubereiten;
c) eine Warteschlangeneinheit (3a) für Zellen zum vorübergehenden Speichern der Zellen (13), die von der Zellbildungseinheit (2) ausgegeben werden, und zur Ausgabe der gespeicherten Zellen (13) in einer first-in/first-out-Weise, und
d) eine Sendevorrichtung (4) zum Empfang der Zellen (13), die von der Warteschlangeneinheit (3a) für Zellen ausgegeben werden, und zum Aussenden der Zellen (13) an die entsprechenden logischen Kanäle (14a-14c),
**gekennzeichnet** durch
eine Verteilungseinheit (6) für Zellen zum Verteilen von Bereichsnummern von Speicherbereichen in der Warteschlangeneinheit (3a) für Zellen,
wobei die genannten Bereichsnummern aus der Bestimmungsort-Information jeder Nachricht (12) berechnet werden, an die Zellen (13), die von der Zellbildungseinheit (2) ausgegeben werden.

16. Vorrichtung nach Anspruch 15,
wobei die Warteschlangeneinheit (3a) für Zellen die gespeicherten Zellen (13) jeder Bereichsnummer in einer first-in/first-out-Weise ausgibt.

17. Vorrichtung nach Anspruch 15, die weiterhin umfaßt:
eine Verteilungstabelle (7) zum Aufzeichnen der Bestimmungsort-Information der Nachrichten, die in der Warteschlangeneinheit (3a) für Zellen vorhanden sind, von Auswahlinformation zur Bestimmung von Bereichsnummern, die der Bestimmungsort-Information entsprechen, und einer Anzahl wartender Nachrichten für jeden Bestimmungsort, wobei die Warteschlangeneinheit (3a) für Zellen die Bereichsnummer unter Bezug auf die Verteilungstabelle (7) verteilt.

18. Vorrichtung nach Anspruch 15, wobei die Warte-schlangeneinheit (3a) für Zellen gespeicherte Zellen (13) getrennt für jeden logischen Kanal (14a-14c) in einer first-in/first-out-Weise ausgibt.

19. Vorrichtung nach Anspruch 15, die weiterhin umfaßt:
eine Umwandlungstabelle (5) zum Speichern, für jede eingegebene Nachricht (12), einer entsprechenden Beziehung zwischen der Bestimmungsort-Information der Nachricht (12) und der Identifikationsinformation für die logischen Kanäle (14a-14c), wobei die Zellbildungseinheit (2) den entsprechenden logischen Kanal (14a-14c) aus der Bestimmungsort-Information der Nachricht (12) durch Bezug auf die Umwandlungstabelle (5) bestimmt.

20. Verfahren zur Verwendung in einem Kommunikationssystem, das eine Warteschlange für Zellen mit einer Vielzahl von Warteschlangen zur Speicherung von Zellen (13) mit festgelegter Länge und einen Satz logischer Kanäle (14a-14c), über die die Zellen (13) übertragen werden sollen, besitzt, bei dem die Zellen jeder eingegebenen Nachricht (12) in einer entsprechenden Warteschlange gespeichert werden,
dadurch **gekennzeichnet**,
daß die Zellen (13) von jeder der Warteschlangen in einer Abfolge die logischen Kanäle (14a-14c) abwärts ausgegeben werden, ohne alle der Zellen (13) wenigstens einer Nachricht (12) auszugeben, bevor eine Zelle (13) von einer der anderen Nachrichten ausgegeben wurde.

21. Verfahren nach Anspruch 20,
wobei der Schritt der Ausgabe der Zellen (13) weiterhin die Ausgabe einer festgelegten Anzahl von Zellen (13) von jeder Warteschlange in Abfolge aufweist.

22. Verfahren nach Anspruch 21,
wobei die festgelegte Zahl von Zellen (13) eine einzelne Zelle ist.

23. Verfahren nach Anspruch 21,
wobei die festgelegte Zahl von Zellen (13) eine Vielzahl von Zellen ist.

24. Verfahren nach Anspruch 20,
wobei die Abfolge, in der die Zellen (13) von den Warteschlangen ausgegeben werden, eine zyklische Abfolge ist.

25. Verfahren nach Anspruch 20,
wobei der Ausgabeschritt weiterhin den Schritt der Ausgabe von Zellen (13) aus mehreren Warteschlangen an einen einzelnen der logische Kanäle (14a-14c) in abwechselnder Weise umfaßt.

26. Verfahren nach Anspruch 20, das weiterhin umfaßt:
den Schritt der Prüfung einer Verteilungstabelle (7) für jede Nachricht (12), um zu bestimmen, auf welchen logischen Kanal (14a-14c) die Zellen (13) der Nachricht (12) ausgegeben werden sollen.

## Revendications

1. Dispositif de multiplexage de cellules de messages pour diviser des messages d'entrée (12) en des cellules de longueur fixe (13) et pour multiplexer les cellules (13) dans des canaux logiques (14a-14c) en fonction d'une information de destination prévue dans les messages d'entrée (12), ledit dispositif comprenant :
(a) une unité (1) à files d'attente de messages pour mémoriser des messages d'entrée (12);
(b) une unité (2) de division en cellules pour diviser les messages (12) en des cellules de longueur fixe (13), pour déterminer les canaux logiques (14a-14c), dans lesquels les cellules (13) peuvent être transmises et pour ajouter aux cellules (13) une information concernant les canaux logiques (14a-14c), par l'intermédiaire desquels les cellules (13) doivent être transmises;
(c) une unité (3) à files d'attente de cellules pour mémoriser simultanément les cellules (13) pour des messages multiples qui sont délivrés par l'unité (2) de division en cellules et pour délivrer les cellules (13); et
(d) un émetteur (4) pour transmettre chaque cellule (13) reçue de la part de l'unité (3) à files d'attente de cellules aux canaux logiques (14a-14c) pendant un créneau temporel,
caractérisé en ce que
les cellules (13) d'au moins l'un des messages d'entrée (12) sont transmises dans des créneaux temporels non successifs.

2. Dispositif selon la revendication 1, dans lequel l'émetteur (4) transmet au moins une cellule (13) à partir de chaque message d'entrée (12) retenu dans l'unité (3) à files d'attente de cellules conformément à une séquence cyclique des messages d'entrée (12).

3. Dispositif selon la revendication 2, dans lequel, conformément à la séquence cyclique, les cellules (13) provenant d'au moins l'un des messages d'entrée (12) dans l'unité (13) à files d'attente de cellules sont transmises plus fréquemment que des cellules (13) provenant d'autres messages d'entrée (12) situés dans l'unité (13) à files d'attente de cellules.

4. Dispositif selon la revendication 2, dans lequel la séquence cyclique est fixe.

5. Dispositif selon la revendication 1, dans lequel l'émetteur (4) transmet les cellules (13) à partir des messages d'entrée (12) en fonction d'une séquence non cyclique des messages d'entrée (12).

6. Dispositif selon la revendication 1, dans lequel l'unité à files d'attente (3) comprend une pluralité de files d'attente et chaque file d'attente conserve l'un séparé des messages d'entrée (12).

7. Dispositif selon la revendication 6, dans lequel la file d'attente reçoit des priorités selon des niveaux de priorité tels que les cellules (13) provenant de niveaux de priorité plus élevés, telles que des cellules (13) provenant d'une file d'attente ayant un niveau de priorité plus élevé sont transmises par l'émetteur (4) avant que des cellules (13) provenant de files d'attente ayant des niveaux de priorité inférieurs soient transmises par l'émetteur (4).

8. Dispositif selon la revendication 7, dans lequel de multiples files d'attente possèdent un même niveau de priorité.

9. Dispositif selon la revendication 7, dans lequel chaque file d'attente correspond à l'un des canaux logiques (14a-14c).

10. Dispositif selon la revendication 1, dans lequel des messages d'entrée (12) ont des priorités situées à des niveaux de priorité tels que des cellules (13) provenant d'un message d'entrée à niveau supérieur (12) sont émises par l'émetteur avant que les cellules (13) provenant d'un message d'entrée à niveau de priorité inférieur (12) soient délivrées par l'émetteur (4).

11. Dispositif selon la revendication 10, dans lequel des messages d'entrée multiples (12) possèdent un même niveau de priorité.

12. Dispositif selon la revendication 1, dans lequel l'émetteur (4) transmet de multiples cellules (13) d'un message d'entrée (12) dans des créneaux temporels successifs.

13. Dispositif selon la revendication 1, dans lequel pour chaque couple successif de créneaux temporels, l'émetteur (4) émet une cellule (13) à partir d'un premier message d'entrée (12) pendant un premier créneau temporel du couple et transmet une cellule (13) à partir d'un second message d'entrée (12), qui diffère du premier message d'entrée (12), pendant un second créneau temporel du couple.

14. Dispositif selon la revendication 1, qui comprend une table de conversion (5) pour mémoriser, pour chaque message (12), une relation correspondante entre l'information de destination du message d'entrée (12) et une information d'identification pour les canaux logiques (14a-14c), l'unité (2) de division en cellules déterminant par l'intermédiaire de quel canal logique (14a-14c) le message (12) doit être transmis à partir de l'information de destination du message (12), par référence à la table de conversion.

15. Dispositif de multiplexage de cellules de données de message pour diviser un message (12) ayant une information de destination en des cellules (13) qui possèdent une longueur prédéterminée, et multiplexer les cellules (13) dans des canaux logiques correspondants, comprenant :
(a) une unité (1) à files d'attente de messages pour mémoriser temporairement des messages de transmission d'entrée (12) et pour délivrer des messages d'entrée (12) selon un mode premier entré - premier sorti;
(b) une unité (2) de division en cellules pour diviser le message d'entrée (12) en des cellules (13) qui sont délivrées, pour déterminer des canaux logiques correspondants (14a-14c) devant être utilisés pour la transmission des cellules (13) à partir de l'information de destination de chaque message (12) qui est délivré par l'unité (1) de files d'attente de messages et ajouter une information concernant les canaux logiques correspondants (14a-14c) pour préparer les cellules (13);
(c) une unité (3a) à files d'attente de cellules pour mémoriser temporairement les cellules (13) délivrées par l'unité (2) de division en cellules et délivrer les cellules mémorisées (13) selon un mode premier entré - premier sorti; et
(d) des moyens d'émission (4) pour recevoir la cellule (13) délivrée par l'unité (3a) à files d'attente de cellules et envoyer les cellules (13) aux canaux logiques correspondants (14a-14c);
caractérisé par
une unité (6) de distribution des cellules pour distribuer des numéros de zones de mémoire dans l'unité (3a) à files d'attente de cellules, lesdits numéros de régions étant calculés à partir de l'information de destination de chaque message (12) pour les cellules (13) délivrées à partir de l'unité (2) de division en cellules.

16. Dispositif selon la revendication 15, dans lequel l'unité (3a) à files d'attente de cellules délivre des cellules mémorisées (13) de chaque numéro de région selon un mode premier entré - premier sorti.

17. Dispositif selon la revendication 15, comprenant en outre une table de distribution (7) pour enregistrer l'information de destination des messages présents dans l'unité (3a) à files d'attente de cellules, une information sélective pour spécifier des numéros de zones qui correspondent à l'information de destination, et un nombre de messages en attente de chaque destination, l'unité (3a) à files d'attente de cellules distribuant le numéro de zone en référence à la table de distribution (7).

18. Dispositif selon la revendication 15, dans lequel l'unité (3a) à files d'attente de cellules délivre des cellules mémorisées (13) séparément pour chaque canal logique (14a-14c) selon un mode premier entré - premier sorti.

19. Dispositif selon la revendication 15, comprenant en outre une table de conversion (5) pour mémoriser, pour chaque message d'entrée (12), une relation correspondante entre l'information de destination du message (12) et une information d'identification pour les canaux logiques (14a-14c), l'unité (2) de division en cellules déterminant le canal logique correspondant (14a-14c) à partir de l'information de destination du message (12) en référence à la table de conversion (5).

20. Procédé destiné à être utilisé dans un système de communication possédant une file d'attente de cellules avec une pluralité de files d'attente pour mémoriser des cellules de longueur fixe (13) et une ensemble de canaux logiques (14a-14c), par l'intermédiaire desquels les cellules (13) doivent être transmises, des cellules de chaque message d'entrée (12) étant mémorisées dans une file d'attente respective,
caractérisé en ce que des cellules (13) provenant de chacune des files d'attente sont délivrées séquentiellement dans les canaux logiques (14a-14c) sans la délivrance de toutes les cellules (13) d'au moins un message (12) avant qu'une cellule (13) de l'un des autres messages soit délivrée.

21. Procédé selon la revendication 20, selon lequel l'étape de délivrance de cellules (13) comprend en outre la délivrance séquentielle d'un nombre fixe de cellules (13) à partir de chaque file d'attente.

22. Procédé selon la revendication 21, selon lequel le nombre de cellules (13) est une seule cellule.

23. Procédé selon la revendication 21, selon lequel le nombre fixe de cellules (13) est une pluralité de cellules.

24. Procédé selon la revendication 20, selon lequel la séquence, avec laquelle les cellules (13) sont délivrées par les files d'attente, est une séquence cyclique.

25. Procédé selon la revendication 20, selon lequel l'étape de délivrance comprend en outre l'étape consistant à délivrer, d'une manière alternative, des cellules (13) à partir de multiples files d'attente à un seul des canaux logiques (14a-14b).

26. Procédé selon la revendication 20, comprenant en outre l'étape consistant à examiner une table de distribution (7) pour chaque message (12) pour déterminer dans quel canal logique (14a-14c) les cellules (13.) des messages (12) doivent être délivrées.
